# EUROPEAN PATENT APPLICATION

(11) **EP 2 947 498 A1**
(43) Date of publication of application: **25.11.2015**
(21) Application number: 15158394.5
(22) Date of filing: 10.03.2015
(51) Int. Cl.: G02B 27/00, G03B 21/14, G02B 27/01

(54) **DISPLAY DEVICE**

(30) Priority: 19.05.2014 JP 2014103508
(71) Applicant: Kabushiki Kaisha Toshiba, Tokyo 105-8001 (JP)
(72) Inventor: Sawada, Shimpei, Tokyo 105-8001 (JP); Horiuchi, Kazuo, Tokyo 105-8001 (JP); Kokojima, Yoshiyuki, Tokyo 105-8001 (JP); Baba, Masahiro, Tokyo 105-8001 (JP)
(74) Representative: Hoffmann Eitle

(57) **Abstract**

According to one embodiment, a display device (100) includes a display unit (110), a first optical element (210), and a reflector (130). The display unit (110) includes a first pixel (1210) emitting a first light, and a second pixel (1110) emitting a second light. The first optical element (210) has an incident surface (21) and an emission surface (22). A diameter of a bundle of rays of the first light at the incident surface (21) is a first value. A diameter of a bundle of rays of the second light at the incident surface (21) is a second value. A diameter of the bundle of rays of the first light at the emission surface (22) is a third value. A diameter of the bundle of rays of the second light at the emission surface (22) is a fourth value. A ratio of the third value to the first value is different from a ratio of the fourth value to the second value.

## Description

### FIELD

Embodiments described herein relate generally to a display device.

### BACKGROUND

For example, there is a display device that includes a display unit that displays an image, a projector that projects the image displayed by the display unit by using multiple optical elements such as lenses and the like, a reflector that reflects the light projected from the projector toward an eye of a viewer, etc. For example, such a display device is used as a head mounted display device such as a head mounted display (HMD), etc. Large aberrations may occur when the light that is emitted from the display unit travels via the multiple optical elements included in the projector, the reflector, etc. A display device that suppresses the aberration and provides an easily-viewable display is desirable.

### BRIEF DESCRIPTION OF THE DRAWINGS

FIG. 1 is a schematic plan view illustrating a display device according to a first embodiment;
FIG. 2 is a schematic plan view illustrating a display device according to a first embodiment;
FIG. 3A and FIG. 3B are schematic views illustrating the display device according to the first embodiment;
FIG. 4 is a schematic view illustrating the display device;
FIG. 5 is a schematic view illustrating a display device according to a second embodiment;
FIG. 6 is a schematic view illustrating another display device according to the second embodiment;
FIG. 7 is a schematic view illustrating another display device according to the second embodiment;
FIG. 8 is a schematic view illustrating another display device according to the second embodiment;
FIG. 9 is a schematic view illustrating the display device according to the second embodiment; and
FIG. 10 is a schematic view illustrating the display device according to the embodiment.

### DETAILED DESCRIPTION

According to one embodiment, a display device includes a display a first optical element, and a reflector. The display unit includes a first pixel and a second pixel. The first pixel emits a first light. The second pixel emits a second light. The first optical element has an incident surface and an emission surface. The first Light and the second light are incident on the incident surface. The first light and the second light are emitted from the emission surface. A diameter of a bundle of rays of the first light at the incident surface is a first value. A diameter of a bundle of rays of the second light at the incident surface is a second value. A diameter of the bundle of rays of the first light at the emission surface is a third value different from the first value. A diameter of the bundle of rays of the second light at the emission surface is a fourth value different from the third value. A ratio of the third value to the first value is different from a ratio of the fourth value to the second value. The reflector reflects at least a portion of the first light emitted from the emission surface and at least a portion of the second light emitted from the emission surface.

Embodiments will now be described with reference to the drawings.

The drawings are schematic or conceptual; and the relationships between the thicknesses and widths of portions, the proportions of sizes between portions, etc., are not necessarily the same as the actual values thereof. Further, the dimensions and/or the proportions may be illustrated differently between the drawings, even in the case where the same portion is illustrated.

In the drawings and the specification of the application, components similar to those described in regard to a drawing thereinabove are marked with like reference numerals, and a detailed description is omitted as appropriate.

### First embodiment

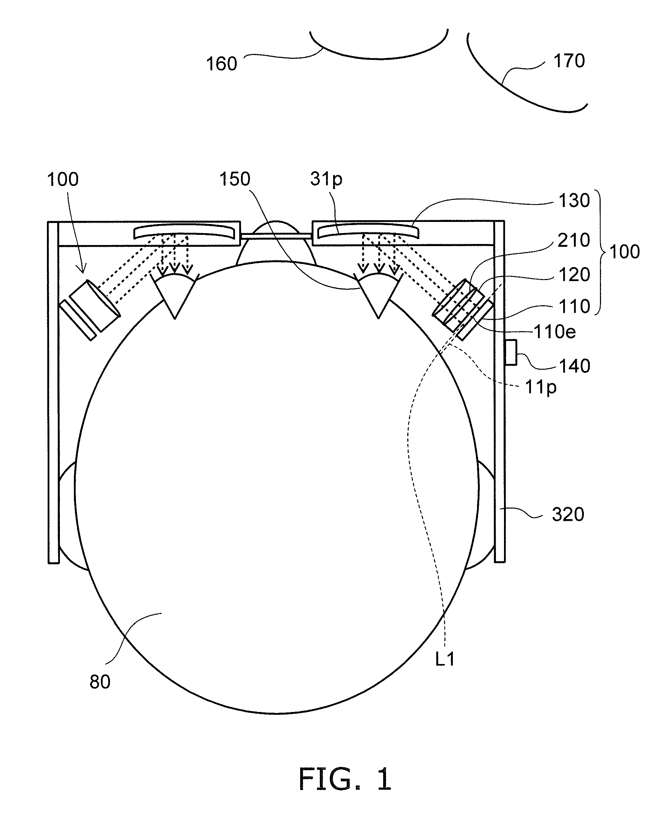

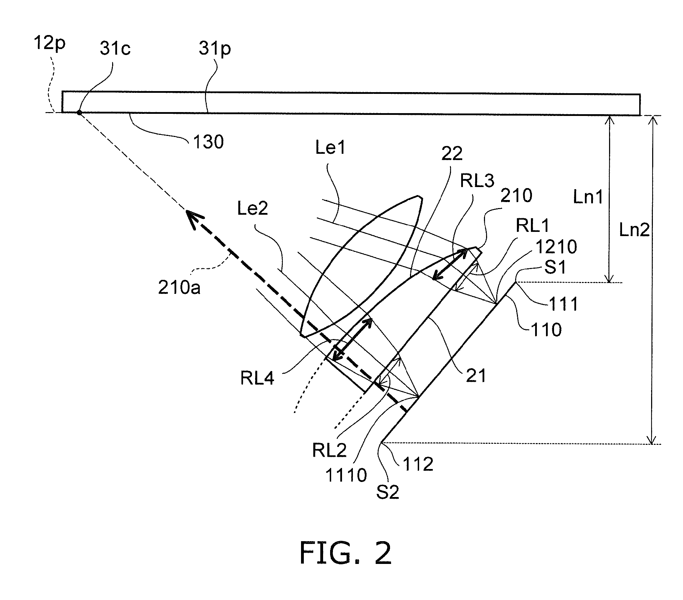

FIG. 1 and FIG. 2 are schematic plan views illustrating a display device according to a first embodiment.

As shown in FIG. 1 and FIG. 2, the display device 100 includes a display unit 110, an optical unit 120 (a projector), a reflector 130, and a processing unit 140.

For example, image information is input to the display unit 110 from the processing unit 140.

The display unit 110 includes multiple pixels 110e. The multiple pixels 110e are provided to be arranged in a first plane 11p. The display unit 110 emits light L1 including the image information. The display unit 110 is a display that displays an image. The light that includes the image information is emitted toward the optical unit 120. The display includes, for example, a liquid crystal, organic EL, liquid crystal on silicon, etc. However, the embodiment is not limited thereto.

The optical unit 120 is provided between the display unit 110 and the reflector 130 in the optical path of the light L1 emitted from the multiple pixels 110e of the display unit 110. For example, the optical unit 120 includes a first optical element 210 that includes multiple optical elements. For example, the first optical element 210 is the optical element of the multiple optical elements most proximal to the display unit 110. The light L1 that is emitted from the display unit 110 is incident on the first optical element 210. For example, the first optical element 210 modifies the travel direction of the light L1. The optical elements include lenses, prisms, mirrors, etc. In the example, the first optical element 210 is a lens. The multiple optical elements may not be arranged in a straight line.

The reflector 130 has a first surface 31p. The reflector 130 is provided at a first surface 31p. The reflector 130 spreads along the first surface 31p and extends in at least two mutually-different directions. The first surface 31p is a main surface of the reflector 130. The reflector 130 reflects at least a portion of the light L1 emitted from the first optical element 210. For example, the reflector 130 reflects the light passing through the optical unit 120 toward a pupil 150 of a viewer 80. When viewed from the pupil 150, the light that is reflected by the reflector 130 forms an image 160 as a virtual image.

In the example, the image is displayed as a virtual image. However, the reflector 130 may display the image as a real image distal to the pupil 150.

In the example, the image 160 is displayed at the front of the pupil 150. However, the image may be displayed like an image 170 at the edge of the visual field of the viewer 80. Thereby, the visual field of the viewer 80 is not obstructed.

In the case where an image is displayed like the image 160 at the front of the pupil 150, the reflector 130 reflects the light incident from obliquely behind the pupil 150 as viewed by the viewer 80 toward the pupil 150 (e.g., in the direction of the normal of the reflector 130). Thereby, the viewer 80 can view the image.

For example, the reflector 130 includes multiple fine reflective surfaces (e.g., half mirrors) that are arranged in parallel on the first surface 31p to reflect at least a portion of the light. Thereby, for example, the reflection angle of the light can be adjusted. In case that the reflector 130 includes multiple mirrors, the surface of the reflector 130 opposite to the optical unit 120 may be considered as the first surface 31p. However, in the embodiment, the reflector 130 is not limited to such half mirrors. Normal half mirrors may be used as the reflector 130; and other members that can similarly adjust the reflection angle may be used. Although an example is described in which the reflectance and the transmittance of the half mirror are the same, the embodiment is not limited to the example in which the reflectance and the transmittance are the same. Any material may be used as the reflective surface as long as the material transmits a portion of the light incident on the reflective surface and reflects another portion of the light.

In the example, the display device 100 further includes a holder 320. The holder 320 holds at least one of the optical unit 120 (the first optical element 210) or the reflector 130 of the display unit 110. For example, the holder 320 regulates the relative arrangement of the reflector 130 and the optical unit 120 (the first optical element 210) and the relative arrangement of the optical unit 120 and the display unit 110. The holder 320 is, for example, an eyeglasses frame. The display device 100 is mountable to the head of the viewer 80 by the holder 320.

It is favorable for the projection unit (the optical unit 120 and the display unit 110) to be disposed on the inner side of the frame when the viewer 80 wears the display device. In other words, it is favorable for the projection unit to be disposed between the viewer 80 and the holder 320 when the display device 100 is used (worn). Thereby, the viewer can use the display device as normal eyeglasses; and discomfort can be reduced when using the display device.

A binocular HMD that uses two display devices 100 is shown in FIG. 1. One of the display devices displays an image to the right eye of the viewer 80; and the other display device displays an image to the left eye. The embodiment may be a monocular HMD that displays an image toward one eye using one display device 100.

As shown in FIG. 2, the display unit 110 has a first end portion 111 and a second end portion 112. The second end portion 112 is separated from the first end portion 111 in one direction inside the first plane 11p. For example, the display unit 110 has two sides (a side S1 and a side S2) opposing each other on the first plane 11p; the first end portion 111 is a point on the side S1; and the second end portion 112 is a point on the side S2. The distance between the first end portion 111 and the reflector 130 is shorter than the distance between the second end portion 112 and the reflector 130.

For example, a tangent plane (a second plane 12p) that is tangent to the first surface 31p and passes through an intersection 31c of the first surface 31p and an optical axis 210a of the first optical element 210 is considered. In the case where the first surface 31p is a plane, the first surface 31p and the second plane 12p are parallel. A distance Ln1 between the second plane 12p and the first end portion 111 is shorter than a distance Ln2 between the second plane 12p and the second end portion 112.

The multiple pixels 110e include a pixel 1210 (a first pixel) and a pixel 1110 (a second pixel). The pixel 1210 emits a first light Le1. The pixel 1110 emits a second light Le2.

The pixel 1210 is provided between the first end portion 111 and the second end portion 112. The pixel 1110 is provided between the first pixel 1210 and the second end portion 112.

The distance between the pixel 1210 and the first end portion 111 is shorter than the distance between the pixel 1210 and the second end portion 112.

The distance between the pixel 1110 and the first end portion 111 is longer than the distance between the pixel 1110 and the second end portion 112.

The first optical element 210 has an incident surface 21 on which the first light Le1 and the second light Le2 are incident, and an emission surface 22 that emits the first light Le1 and the second light Le2 that are incident. In other words, the first light Le1 is incident on the first optical element 210 at the incident surface 21, passes through the first optical element 210, and is emitted from the emission surface 22. The second light Le2 is incident on the first optical element 210 at the incident surface 21, passes through the first optical element 210, and is emitted from the emission surface 22. The reflector 130 reflects at least a portion of the first light Le1 emitted from the emission surface 22 and at least a portion of the second light Le2 emitted from the emission surface 22.

The diameter of the bundle of rays of the first light Le1 at the incident surface 21 is a first value RL1. The diameter of the bundle of rays of the second light Le2 at the incident surface 21 is a second value RL2.

The diameter of the bundle of rays of the first light Le1 at the emission surface 22 is a third value RL3. The diameter of the bundle of rays of the second light Le2 at the emission surface 22 is a fourth value RL4.

The third value RL3 is different from the first value RL1. The fourth value RL4 is different from the second value RL2 and different from the third value RL3.

The ratio of the third value RL3 to the first value RL1 is lower than the ratio of the fourth value RL4 to the second value RL2. Each of the multiple pixels 110e emits light having a constant spread angle. In the example, the first value RL1 is substantially the same as the second value RL2.

For example, the first optical element 210 causes the diameter of the bundle of rays of the light emitted from the second pixel to be larger than the diameter of the bundle of rays of the light emitted from the first pixel. Thereby, the aberration described below the virtual image that is formed can be suppressed.

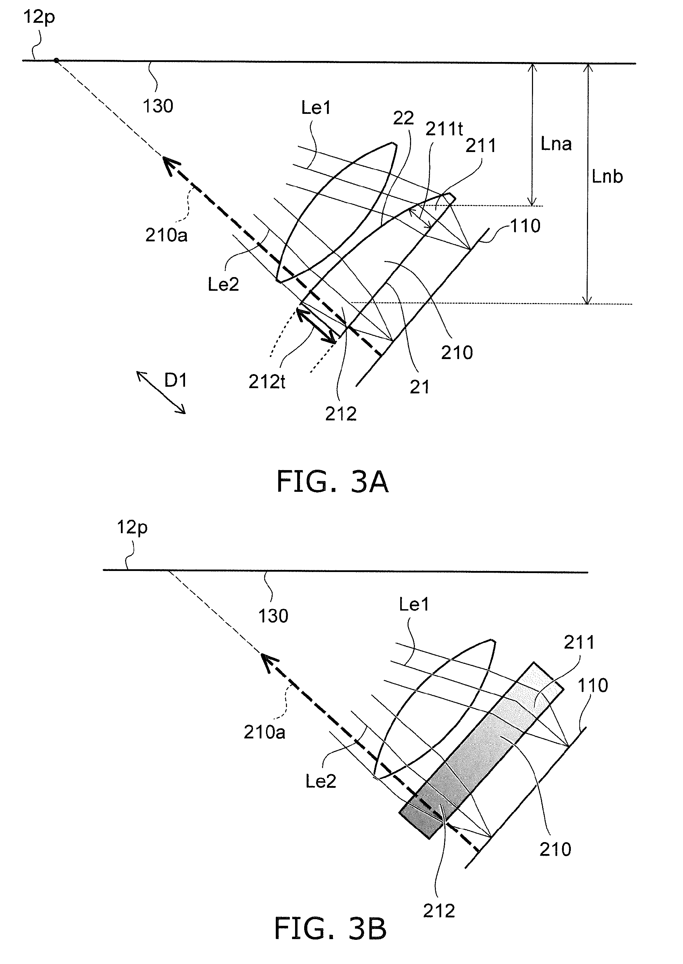

FIG. 3A and FIG. 3B are schematic views illustrating the display device according to the first embodiment.

As shown in FIG. 3A, the first optical element 210 includes, for example, a decentered lens. The first optical element 210 includes a first portion 211 and a second portion 212. For example, the first light Le1 passes through the first portion 211. The second light Le2 passes through the second portion 212.

For example, the distance between the first portion 211 and the reflector 130 is shorter than the distance between the second portion 212 and the reflector 130. In the example, a distance Lna between the first portion 211 and the second plane 12p is shorter than a distance Lnb between the second portion 212 and the second portion 212.

For example, the thickness of the first portion 211 is thinner than the thickness of the second portion 212. In other words, a length 211t of the first portion 211 along a first direction D1 connecting the first optical element 210 and the display unit 110 is shorter than a length 212t of the second portion 212 along the first direction D1.

The optical path length of the first light Le1 inside the first optical element 210 is shorter than the optical path length of the second light Le2 inside the first optical element 210.

As shown in FIG. 3B, the first optical element 210 may include a GRIN lens (Gradient Index lens). For example, the refractive index of the first portion 211 is different from the refractive index of the second portion 212. In the example, the refractive index of the first portion 211 is lower than the refractive index of the second portion 212.

The diameter of the bundle of rays can be adjusted by using such a first optical element 210. As described above, for example, the aberration can be suppressed by setting the fourth value RL4 to be larger than the second value RL2.

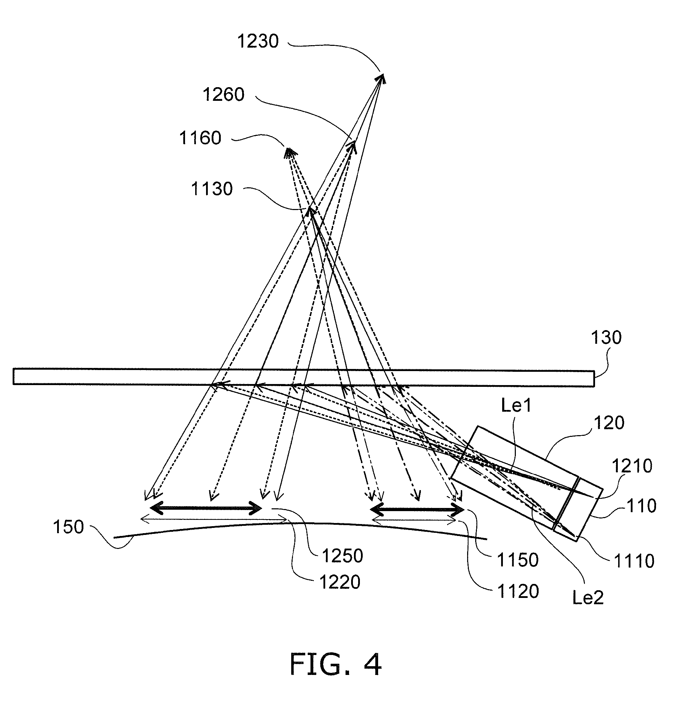

FIG. 4 is a schematic view illustrating the display device.

FIG. 4 shows optical paths in the case where the first optical element 210 is used. The optical paths in the case where an optical element 219 (not shown) of a reference example is used instead of the first optical element 210 also are shown.

The optical element 219 of the reference example is, for example, a convex lens that is not decentered. Similarly to the first optical element 210, the optical element 219 of the reference example has an incident surface and an emission surface. In the case where the optical element 219 is used, the diameter of the bundle of rays at the emission surface of the light emitted from the pixel 1210 is substantially equal to the diameter of the bundle of rays at the emission surface of the light emitted from the pixel 1210.

In the case where the optical element 219 of the reference example is used, the light that is emitted from the pixel 1110 travels via the reflector 130, is projected toward a region 1120 on the pupil 150, and forms an image at an imaging position 1130. Similarly, in the case where the optical element 219 of the reference example is used, the light that is emitted from the pixel 1210 is projected toward a region 1220 on the pupil 150 and forms an image at an imaging position 1230.

The light distribution angle of the bundle of rays that is emitted from each pixel is substantially the same between the multiple pixels. However, there are cases where the optical path length to the reflector 130 is different between the positions where the pixels are provided.

For example, the optical path length from the optical element 219 (or the first optical element 210) to the reflector 130 of the light emitted from the pixel 1110 is longer than the optical path length from the optical element 219 (or the first optical element 210) to the reflector 130 of the light emitted from the pixel 1210.

Therefore, in the case where the optical element 219 of the reference example is used, the region where the bundle of rays corresponding to the pixel 1210 is projected onto the reflector 130 is wider than the region where the bundle of rays corresponding to the pixel 1110 is projected onto the reflector 130. Accordingly, the region 1220 is wider than the region 1120.

Therefore, when viewed by the viewer 80, the imaging position 1230 where the bundle of rays projected onto the region 1220 having the wide surface area forms an image is more distal than the imaging position 1130 where the bundle of rays projected onto the region 1120 having the narrow surface area forms an image. As a result, aberrations of mainly tilt occur in the image formed in the region including the imaging position 1230 and the imaging position 1130.

Conversely, the bundle of rays that is emitted from the pixel 1210 and passes through the first optical element 210 is finer in the display device 100 according to the embodiment than in the optical element 219 of the reference example.

In the case where the first optical element 210 according to the embodiment is used, the bundle of rays that is emitted from the pixel 1210 travels via the reflector 130, is projected onto a region 1250 on the pupil 150, and forms an image at an imaging position 1260. The region 1250 is narrower than the region 1220. Thereby, compared to the imaging position 1230, the imaging position 1260 is more proximal to the pupil 150.

On the other hand, the bundle of rays that is emitted from the pixel 1110 and passes through the first optical element 210 is wider than that of the optical element 219 of the reference example.

In the case where the first optical element 210 according to the embodiment is used, the bundle of rays that is emitted from the pixel 1110 travels via the reflector 130, is projected onto a region 1150 on the pupil 150, and forms an image at an imaging position 1160. The region 1150 is wider than the region 1120. Thereby, compared to the imaging position 1130, the imaging position 1160 is more distal to the pupil 150.

Thus, the imaging position can be adjusted by adjusting the diameter of the bundle of rays emitted from the first optical element 210. For example, the distances between the pupil 150 and each of the imaging positions of the bundle of rays emitted from the pixels can be set to be substantially equal. Thereby, when viewed from the pupil 150, an image in which the aberration is suppressed can be formed. An easily-viewable display can be obtained.

For example, a method that includes contrivances for the tilt and/or configuration of the reflective surfaces of the reflector may be considered to suppress the aberration. However, it is difficult to manufacture a special reflector with high precision. Conversely, in the embodiment, the aberration can be suppressed by the optical elements of the optical unit. Thereby, for example, the design and manufacture of the display device are easy.

### Second embodiment

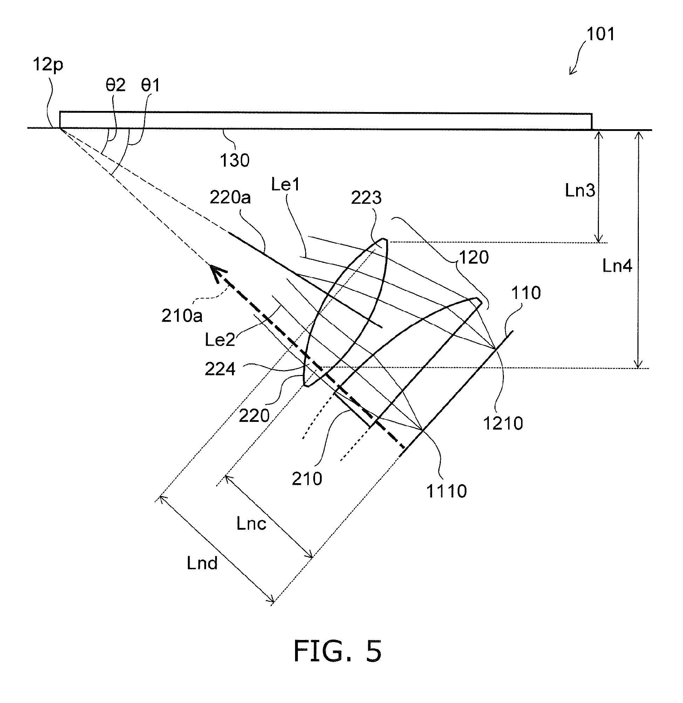

FIG. 5 is a schematic view illustrating a display device according to a second embodiment.

In the display device 101, the optical unit 120 includes the first optical element 210 and a second optical element 220. The second optical element 220 is provided between the display unit 110 and the reflector 130.

In the example, the first optical element 210 is provided between the second optical element 220 and the display unit 110 in the optical paths of the light emitted from the pixels of the display unit 110.

The first light Le1 and the second light Le2 are incident on the second optical element 220. For example, the second optical element 220 changes the travel direction of the first light Le1 and the travel direction of the second light Le2.

For example, the optical paths of the light emitted from the pixels of the display unit 110 are tilted by passing through the first optical element 210 (the decentered lens). As a result, the optical paths of the light incident on the reflector 130 also are tilted; the optical paths of the reflected light also are tilted; and there are cases where the light undesirably does not reach the pupil 150.

Conversely, in the display device 101 according to the embodiment, the second optical element 220 is disposed to be tilted with respect to the first optical element 210. In other words, a direction parallel to an optical axis 220a of the second optical element 220 intersects a direction parallel to the optical axis 210a of the first optical element 210 when projected onto a plane. In other words, the optical axis 220a (the second optical axis) is tilted with respect to the optical axis 210a (the first optical axis). Thereby, the optical path that is tilted by the first optical element 210 can be corrected.

For example, an angle θ1 between the optical axis 210a and the second plane 12p is larger than an angle θ2 between the optical axis 220a and the second plane 12p.

For example, the second optical element 220 includes a third portion 223 and a fourth portion 224. For example, the first light Le1 passes through the third portion 223. The second light Le2 passes through the fourth portion 224. The distance between the third portion 223 and the reflector 130 is shorter than the distance between the fourth portion 224 and the reflector 130. In the example, a distance Ln3 between the third portion 223 and the second plane 12p is shorter than a distance Ln4 between the fourth portion 224 and the second plane 12p. A distance Lnc between the third portion 223 and the display unit 110 is longer than a distance Lnd between the fourth portion 224 and the display unit 110.

For example, the second optical element 220 is disposed so that the travel direction of the light passing through the second optical element 220 matches that of the case where the decentered lens is not used. Thereby, the effects of the tilt of the optical path due to the decentered lens can be suppressed.

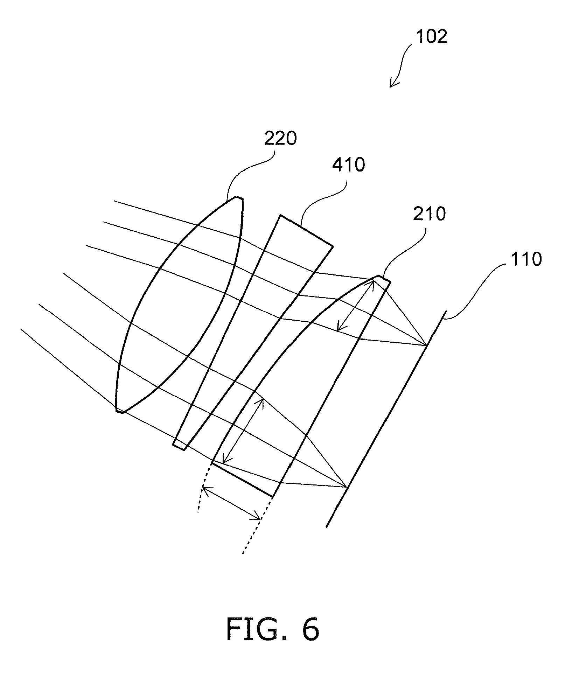

FIG. 6 is a schematic view illustrating another display device according to the second embodiment.

In the display device 102 shown in FIG. 6, the optical unit 120 includes the first optical element 210, the second optical element 220, and a prism 410. The prism 410 is provided between the display unit 110 and the reflector 130.

The first light Le1 and the second light Le2 are incident on the prism 410. For example, the prism 410 changes the travel direction of the first light Le1 and the travel direction of the second light Le2. In the example, the prism 410 is provided between the first optical element 210 and the second optical element 220.

As described above, for example, the optical path of the light is tilted when passing through the first optical element 210 (the decentered lens). Conversely, the prism 410 is added to the optical unit 120. Thereby, the optical path that is tilted by the first optical element 210 can be corrected. The light can be caused to travel toward the reflector 130. The correction of the optical path is easier than in the case where only the disposition of the second optical element 220 is used to correct the optical path.

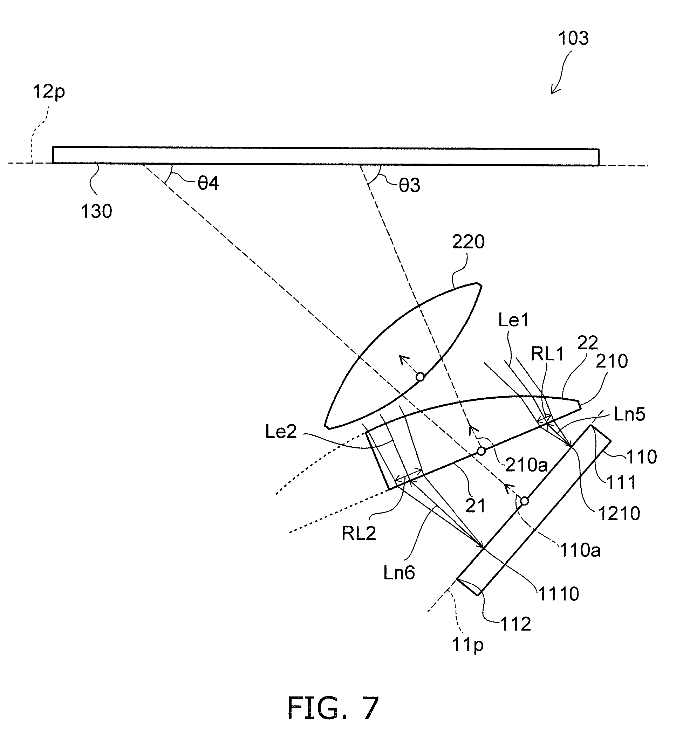

FIG. 7 is a schematic view illustrating another display device according to the second embodiment.

In the display device 103 as shown in FIG. 7, the first optical element 210 has the optical axis 210a. A direction parallel to the optical axis 210a intersects a direction parallel to a normal 110a of the first plane 11p (a perpendicular direction perpendicular to the first plane 11p) when projected onto a plane. In other words, the normal 110a of the first plane 11p is tilted with respect to the optical axis 210a of the first optical element 210. For example, the angle between the optical axis 210a and the normal 110a is not less than 1 degree and not more than 10 degrees. Thus, the display unit 110 is disposed to be tilted with respect to the optical unit 120.

For example, an angle θ3 between the second plane 12p and the direction parallel to the optical axis 210a is larger than an angle θ4 between the normal 110a and the second plane 12p.

A distance Ln5 between the first end portion 111 and the first optical element 210 is shorter than a distance Ln6 between the second end portion 112 and the first optical element 210.

Thus, by disposing the display unit 110 to be tilted with respect to the optical unit 120, for example, the pixel 1210 of the display unit 110 is proximal to the first optical element 210. The pixel 1110 of the display unit 110 is distal to the first optical element 210.

For example, the light distribution angle of the bundle of rays emitted from each pixel is substantially the same between the pixels of the display unit 110. Therefore, the diameter of the bundle of rays (the first value RL1) at the incident surface 21 of the first light Le1 is relatively small; and the diameter of the bundle of rays (the second value RL2) at the incident surface 21 of the second light Le2 is relatively large.

Similarly to the description of FIG. 4, the decrease of the first value RL1 causes the region where the first light Le1 is projected onto to the pupil 150 to become narrow. Thereby, the imaging position of the first light Le1 becomes proximal to the pupil 150. Similarly, the increase of the second value RL2 causes the region where the second light Le2 is projected onto to the pupil 150 to become wide. Thereby, the imaging position of the second light Le2 becomes distal to the pupil 150.

Thus, the imaging position can be adjusted by the disposition of the display unit 110. Thereby, the aberration can be suppressed. For example, a decentered lens is used as the first optical element 210; and the display unit 110 is disposed to be tilted with respect to the optical unit 120. Thereby, the aberration can be suppressed further.

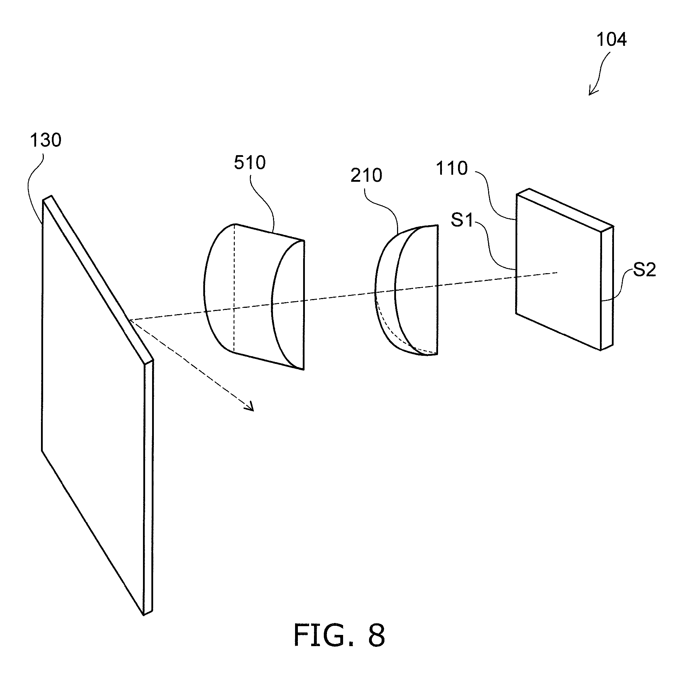

FIG. 8 is a schematic view illustrating another display device according to the second embodiment.

In the display device 104, the optical unit 120 further includes a cylindrical lens 510. The first optical element 210 is provided between the cylindrical lens 510 and the display unit 110 in the optical paths of the first light Le1 and the second light Le2.

For example, there are cases where an astigmatic aberration occurring in the image cannot be corrected sufficiently by the dispositions of the first optical element 210 and the display unit 110. Conversely, by adding the cylindrical lens 510, the astigmatic aberration occurring in the image can be suppressed.

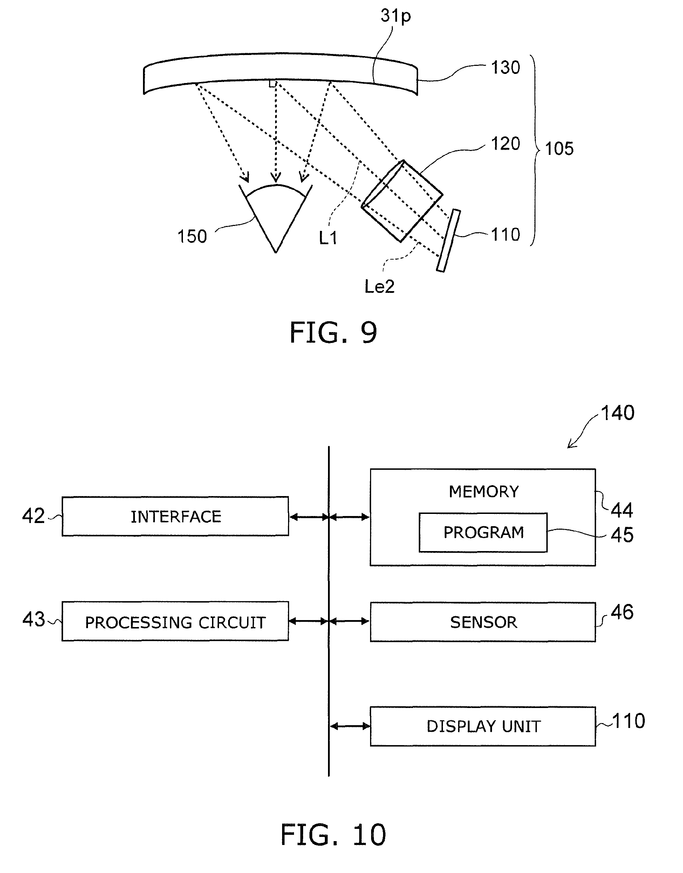

FIG. 9 is a schematic view illustrating the display device according to the second embodiment.

In the reflector 130 of the display device 105 shown in FIG. 9, the reflective surface that reflects the first light Le1 and the second light Le2 has a refractive power. Thereby, for example, the width of the region where the first light Le1 and the second light Le2 are projected onto the pupil 150 is adjusted; and the imaging position can be adjusted. It is easy to suppress the aberration by using the reflector 130 having the reflective surface that has a refractive power. For example, it is unnecessary to suppress the aberration using only the optical unit 120 and the display unit 110; and the design of the optical unit 120 and the display unit 110 is easier.

The configuration of the first surface 31p is a concave configuration as viewed from the position of the optical unit 120. Thereby, the reflector 130 that is provided at the first surface 31p can have a refractive power.

In the embodiment, the first surface 31p may be a plane. In such a case, the reflector 130 includes multiple reflective surfaces; and the tilt with respect to the optical unit 120 of each of the multiple reflective surfaces is adjusted. Thereby, the reflector 130 can have a refractive power.

FIG. 10 is a schematic view illustrating the display device according to the embodiment.

FIG. 10 shows an example of the system configuration of the display device according to the embodiment. The example shown in FIG. 10 is an example of the display device according to the embodiment and does not necessarily match the actual module.

As shown in FIG. 10, the processing unit 140 includes, for example, an interface 42, a processing circuit (a processor) 43, and memory 44.

For example, the processing unit 140 acquires the image information by being connected to an external storage medium and/or a network via the interface 42. A wired or wireless method may be used for the external connection.

For example, a program 45 that processes the acquired image information is stored in the memory 44. For example, the image information is appropriately converted based on the program 45; and thereby, an appropriate display is performed by the display unit 110. The image information may be stored in the memory 44. The program 45 may be provided in the state of being pre-stored in the memory 44, may be provided via a network and/or a storage medium such as CD-ROM, etc., or may be appropriately installed.

The processing unit 140 may include a sensor 46. The sensor 46 may include, for example, any sensor such as a camera, a microphone, a positional sensor, an acceleration sensor, etc. For example, the image that is displayed by the display unit 110 is modified appropriately based on the information obtained from the sensor 46. Thereby, the convenience and ease of viewing of the display device can be improved.

For example, the image information, the information obtained from the sensor 46, etc., are processed based on the program 45 by the processing circuit 43.

Thus, the obtained image information is input to the display unit 110 from the processing unit 140; and the display is performed by the display device.

A portion of each block or each entire block of the processing unit 140 may include an integrated circuit such as LSI (Large Scale Integration), etc., or an IC (Integrated Circuit) chipset. Each block may include an individual circuit; or a circuit in which some or all of the blocks are integrated may be used. The blocks may be provided as a single body; or some blocks may be provided separately. Also, for each block, a portion of the block may be provided separately. The integration is not limited to LSI; and a dedicated circuit or a general-purpose processor may be used.

According to the embodiments, an easily-viewable display device can be provided.

In the specification of the application, "perpendicular" and "parallel" include not only strictly perpendicular and strictly parallel but also, for example, the fluctuation due to manufacturing processes, etc.; and it is sufficient to be substantially perpendicular and substantially parallel.

Hereinabove, embodiments of the invention are described with reference to specific examples. However, the embodiments of the invention are not limited to these specific examples. For example, one skilled in the art may similarly practice the invention by appropriately selecting specific configurations of components such as the display unit, the optical unit, the reflector, the optical element, the holder, etc., from known art; and such practice is within the scope of the invention to the extent that similar effects can be obtained.

Further, any two or more components of the specific examples may be combined within the extent of technical feasibility and are included in the scope of the invention to the extent that the purport of the invention is included.

Moreover, all display devices practicable by an appropriate design modification by one skilled in the art based on the display devices described above as embodiments of the invention also are within the scope of the invention to the extent that the spirit of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. A display device (100), comprising:
a display unit (110) including a first pixel (1210) to emit a first light and a second pixel (1110) to emit a second light;
a first optical element (210) having an incident surface (21) and an emission surface (22), the first light and the second light being incident on the incident surface (21), the first light and a second light being emitted from the emission surface (22); and
a reflector (130) to reflect at least a portion of the first light emitted from the emission surface (21) and at least a portion of the second light emitted from the emission surface (22),
a diameter of a bundle of rays of the first light at the incident surface (21) being a first value,
a diameter of a bundle of rays of the second light at the incident surface (21) being a second value,
a diameter of the bundle of rays of the first light at the emission surface (22) being a third value different from the first value,
a diameter of the bundle of rays of the second light at the emission surface (22) being a fourth value different from the third value,
a ratio of the third value to the first value being different from a ratio of the fourth value to the second value.

2. The device (100) according to claim 1, wherein
the display unit (110) has a first end portion (111), and a second end portion (112) separated from the first end portion (111),
a distance between the first end portion (111) and the reflector (130) is shorter than a distance between the second end portion (112) and the reflector (130),
the first pixel (1210) is provided between the first end portion (111) and the second end portion (112),
the second pixel (1110) is provided between the first pixel (1210) and the second end portion (112), and
the ratio of the third value to the first value is lower than the ratio of the fourth value to the second value.

3. The device (100) according to claim 1, wherein
an optical path length of the first light from the first optical element (210) to the reflector (130) is longer than an optical path length of the second light from the first optical element (210) to the reflector (130), and
the ratio of the third value to the first value is lower than the ratio of the fourth value to the second value.

4. The device (100) according to claim 1, wherein an optical path length of the first light inside the first optical element (210) is shorter than an optical path length of the second light inside the first optical element (210).

5. The device (100) according to any of claims 1-4, wherein
the first optical element (210) includes a first portion (211) and a second portion (212), the first light passing through the first portion (211), the second light passing through the second portion (212), and
a thickness of the first portion (211) of the first optical element (210) is thinner than a thickness of the second portion (212).

6. The device (100) according to any of claims 1-4, wherein
the first optical element (210) includes a first portion (211) and a second portion (212), the first light passing through the first portion (211), the second light passing through the second portion (212), and
a refractive index of the first portion (211) is lower than a refractive index of the second portion (212).

7. The device (100) according to any of claims 1-6, wherein the first optical element (210) is a decentered lens.

8. The device (101) according to any of claims 1-7, further comprising a second optical element (220) to change a travel direction of the first light and a travel direction of the second light, the second optical element (220) being provided between the display unit (110) and the reflector (130), the first light and the second light being incident on the second optical element (220),
a first optical axis (210a) of the first optical element (210) being tilted with respect to a second optical axis (220a) of the second optical element (220).

9. The device (101) according to claim 8, wherein
the reflector (130) has a first surface (31p) and spreads along the first surface (31p), and
an angle between the first optical axis (210a) and a tangent plane is larger than an angle between the tangent plane and the second optical axis (220), the tangent plane is tangent to the first surface (31p) and passing through an intersection of the first optical axis (210a) and the first surface (31p).

10. The device (101) according to claim 8, wherein
the second optical element (220) includes a third portion (223) and a fourth portion (224),
a distance between the third portion (223) and the reflector (130) is shorter than a distance between the fourth portion (224) and the reflector (130), and
a distance between the third portion (223) and the display unit (110) is longer than a distance between the fourth portion (224) and the display unit (110).

11. The device (102) according to any of claims 1-10, further comprising a prism (410) provided between the display unit (110) and the reflector (130), the prism (410) changing a travel direction of light incident on the prism (410).

12. The device (103) according to any of claims 1-7, wherein
the first pixel (1210) and the second pixel (1110) are arranged in a first plane, and
a perpendicular direction perpendicular to the first plane is tilted with respect to a first optical axis (210a) of the first optical element (210).

13. The device (103) according to claim 12, wherein
the reflector (130) has a first surface (31p) and spreads along the first surface (31p), and
an angle between the first optical axis (210a) and a tangent plane is larger than an angle between the tangent plane and the perpendicular direction, the tangent plane is tangent to the first surface (31p) and passing through an intersection of the first optical axis (210a) and the first surface (31p).

14. The device (103) according to claim 2, wherein
the first pixel (1210) and the second pixel (1110) are arranged in a first plane,
a perpendicular direction perpendicular to the first plane is tilted with respect to a first optical axis (210a) of the first optical element (210), and
a distance between the first end portion (111) and the first optical element (210) is shorter than a distance between the second end portion (112) and the first optical element (210).

15. The device (104) according to any of claims 1-14, further comprising a cylindrical lens (510) provided between the reflector (130) and the first optical element (210).

16. The device (105) according to any of claims 1-15, wherein a reflective surface of the reflector (130) reflects the first light and the second light and has a refractive power.

17. The device (100) according to any of claims 1-16, wherein the reflector (130) has a plurality of reflective surfaces.

18. The device (100) according to any of claims 1-17, further comprising a holder (320) to hold at least one of the reflector (130), the first optical element (210), or the display unit (110),
the device (100) being mountable on the head of a viewer,
the display unit (110) and the first optical element (210) being disposed between the head and the holder (320) when mounted.

19. The device (100) according to any of claims 1-18, wherein a reflective surface of the reflector (130) reflects a portion of light incident on the reflective surface and transmits another portion of the light incident on the reflective surface.

20. The device (100) according to any of claims 1-19, further comprising a processing unit (140) to input image information to the display unit (110),
the first light including the image information.
